# EUROPEAN PATENT SPECIFICATION

(11) **EP 2 016 815 B1**
(45) Date of publication and mention of the grant of the patent: **28.10.2009**
(21) Application number: 07425447.5
(22) Date of filing: 20.07.2007
(51) Int. Cl.: A01B 33/08, A01B 33/02

(54) **Farming apparatus**
Landwirtschaftliche Maschine
Appareil agricole

(43) Date of publication of application: 21.01.2009
(73) Proprietor: Berta Franco & C. S.n.c., 14042 Calamandrana (AT) (IT)
(72) Inventor: Berta, Sergio, 14042 Calamandrana (Asti) (IT); Berta, Franco, 14042 Calamandrana (Asti) (IT)
(74) Representative: Lunati, Vittoriano

(56) References cited:
- FR-A- 2 689 363
- GB-A- 975 001
- GB-A- 1 161 416
- US-A- 2 751 833

## Description

The present invention relates to a farming apparatus of the type specified in the preamble of the first claim.

Various types of farming equipment are currently known, including farming machines, and walking tractors and tillers in particular.

Said machines are designed to perform farming and similar operations, such as ploughing a field, tilling, preparing a field for sowing, cutting grass, milling the surface layer of snow on ski runs, and other such operations.

Walking tractors and tillers comprise a motor and an internal generator, wheels, and a tool for performing one or more of said farming operations.

They also comprise handlebars to enable the machine to be guided manually by an operator.

More in particular, walking tractors comprise a first portion that includes the motor and the drive wheels that are driven by said motor, and a second portion that includes said farming tool.

The two portions can be separated or connected together by means of a power takeoff consisting of a joint that connects two separable portions of a shaft capable of rotation in a direction parallel to the direction in which the walking tractor moves.

Said power takeoff is consequently situated to the rear of the walking tractor. Tillers, on the other hand, comprise a principal portion that can be fitted with two drive wheels or, as an alternative to said wheels, with tools for tilling the soil. Thus, if no wheels are used, the tool that turns the soil also enables the forward progress of the tiller.

Tillers are consequently smaller in size than walking tractors and they are more flexible and manageable to use.

Tillers can be used either with said type of tool or to draw a plough or other farming tools.

Moreover, tillers are provided with a lateral power takeoff that can engage with a drive belt to transmit a rotary motion to small tools that can be connected to the tiller.

The above-described known state of the art has several important drawbacks.

In fact, walking tractors are often not very easy to use in simple farming operations that are easily performed by a tiller. On the other hand, tillers do not have the versatility of walking tractors, to which a considerable variety of tools can be attached.

Farms and farmers are consequently often obliged to purchase both types of farming machine, incurring a considerable expense for their purchase and maintenance.

The apparatus described in patent US 2751833, comprising both a frontal and a lateral coupling element, partially solve these problems.

Given this situation, the technical aim lying behind the present invention is to design a farming apparatus substantially capable of overcoming the above-mentioned drawbacks.

Within said technical aim, an important object of the invention is to produce a farming apparatus that has the manageability of a tiller with the versatility of a walking tractor.

Another important object of the invention is to design a farming apparatus that can carry the tools needed for the farming operations typically performed by a walking tractor, while it also enables the farming operations typical of a tiller to be performed with the same manageability as a walking tractor.

The above-stated technical aim and objects are achieved by a farming apparatus according to the attached Claim 1.

Preferred embodiments of the invention are described in the dependent claims.

Other characteristics and advantages of the invention are further elucidated in the following detailed description of a preferred embodiment of the invention, given with reference to the attached drawings, wherein:

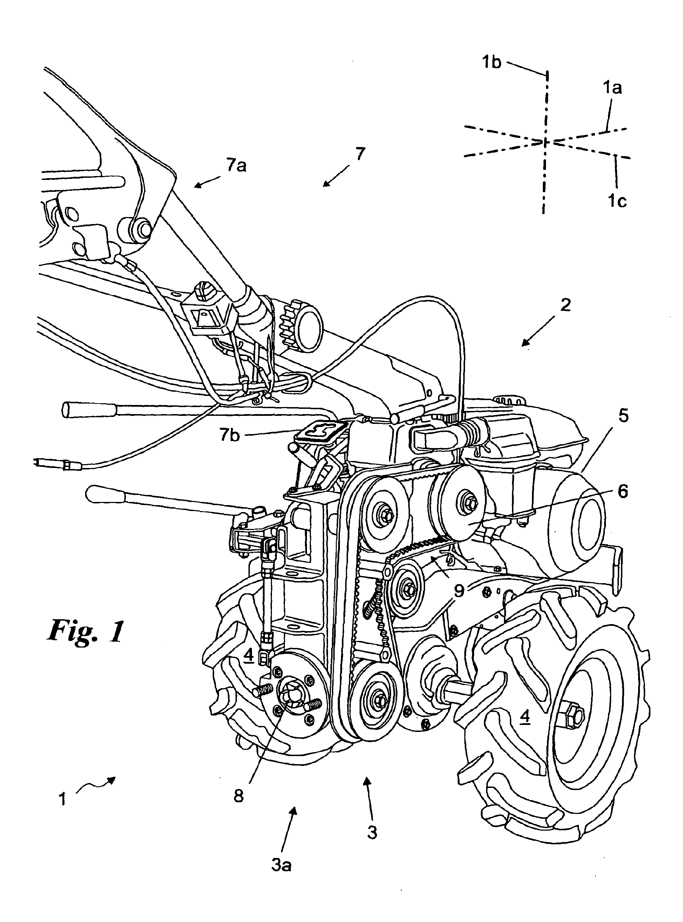

**Fig. 1** shows the farming apparatus according to the invention attached to a farming machine;

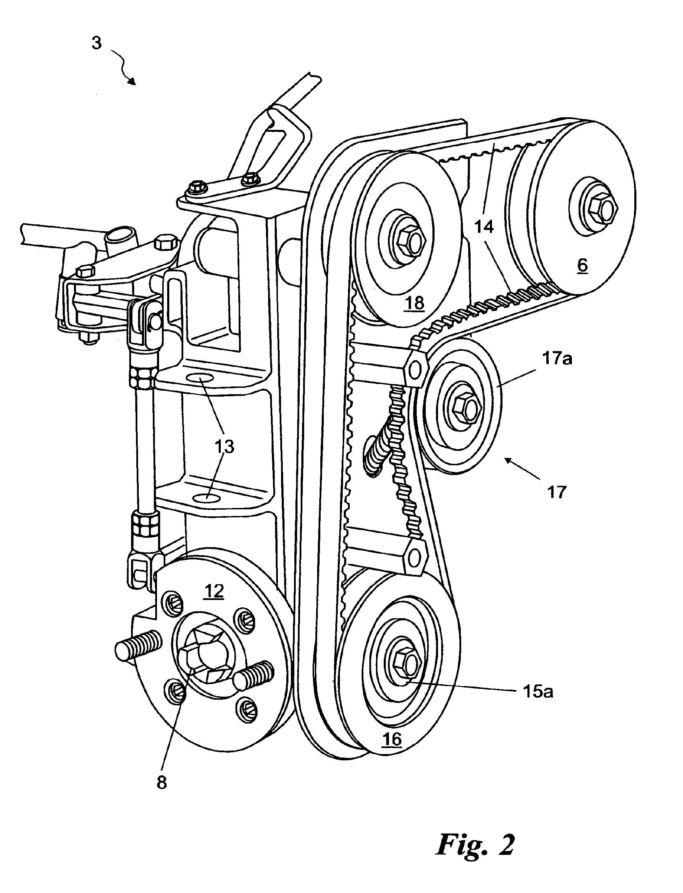

**Fig. 2** shows the farming apparatus according to the invention in a first three-dimensional view;
**Fig. 3** shows the farming apparatus according to the invention in a second three-dimensional view;
**Fig. 4** shows the farming apparatus according to the invention in a third three-dimensional view;
**Fig. 5** shows a detail of the farming apparatus according to the invention; and
**Fig. 6** shows an exploded view of another detail of the farming apparatus according to the invention.

With reference to the above-mentioned figures, the numeral **1** globally indicates a farming machine including a farming apparatus **3a** according to the invention.

It comprises a drive unit **2** that basically includes drive means **4,** a motor **5** for moving said drive means 4, a revolving lateral coupling element **6**, connected to the motor 5 and designed to be connected to suitable tools, and handling means **7.**

For the sake of simplicity, moreover, there is an established longitudinal direction **1a** coinciding with the forward feed direction of the farming machine 1, a vertical direction **1b,** and a crosswise direction **1c** that is perpendicular to the previous directions.

The drive unit 2 is substantially a farming machine, such as a tiller. In particular, said drive unit 2 can be in a tiller produced by Honda^{®}, namely a tiller in the F range, and particularly the model F560 or F720.

The drive means 4 can consist of two wheels or, alternatively, of a tool suitable for tilling the soil.

The motor 5 consists, for instance, of a petrol-driven motor, preferably with a power rating coming between 5 hp and 14 hp, suitable for turning the drive means 4 and the lateral coupling element 6.

This latter element suitably comprises a pulley, with a seat designed to contain a drive belt with its axis of rotation lying in the crosswise direction 1c, situated on one side of the drive unit 2.

Finally, the handling means 7 comprise handlebars **7a** and gearing **7b.**

In particular, the handlebars 7a have controls for the brakes, clutch and accelerator, and for switching the apparatus on and off, and they are designed to enable the forward feed direction of the farming machine 1 to be changed.

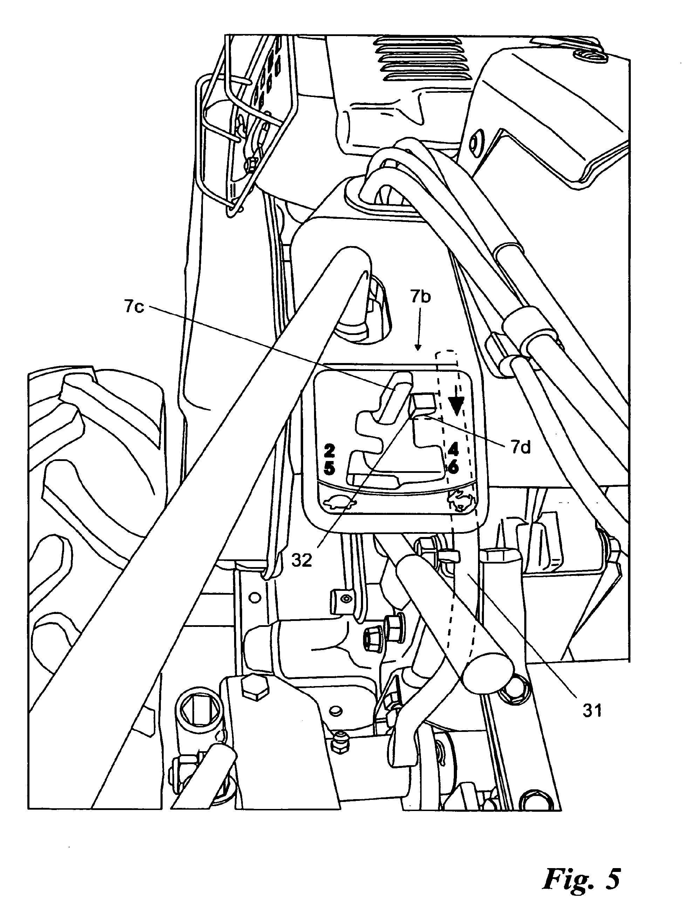

The gearing 7b comprises a lever **7c** for engaging in seats coinciding with which a different forward feed gear or reverse 7d gear is engaged, as shown in Fig. 5.

The farming machine 1 also comprises the farming apparatus 3a, which consists of a transmission device **3,** in the form of a member that is separable from and associable with the drive unit 2, and that is preferably manufactured and supplied separately from the drive unit 2.

Said transmission device 3 basically comprises a front coupling element **8** capable of rotation in a substantially longitudinal direction 1a and designed to be connected to a tool, releasable connection means **9** for linking the rotation of the front coupling element 8 with the rotation of the lateral coupling element 6 of the drive unit 2, and preferably comprising releasable joining means **11**, suitable for structurally linking the transmission device 3 to the drive unit 2.

More in particular, the front coupling element 8 comprises a portion of shaft that includes a plurality of teeth extending in the longitudinal direction 1a.

Said front coupling element 8 is normally provided in walking tractors and can be used to fit a great variety of tools that include a revolving shaft, and it comprises a coupling element that is substantially identical to and a mirror image of the front coupling element 8 forming part of the transmission device 3, and designed to be connected to the latter.

The front coupling element 8 is surrounded by a supporting crown **12,** that can engage with a supporting crown designed for said purpose that forms part of the tools suitable for connecting to the front coupling element 8.

Said supporting crown 12 preferably comprises a plurality of bolts, or seats for bolts, suitable for structurally supporting the tool in question.

The releasable connection means 9 preferably comprise a drive belt **14** for connecting to the lateral coupling element 6 and two drive shafts, particularly a crosswise drive shaft **15a,** extending in a substantially crosswise direction 1c and turned by the drive belt 14, and a longitudinal drive shaft **15b,** extending in a substantially longitudinal direction 1a and suitable for attaching to the front coupling element 8.

More in particular, the drive belt 14 lies substantially in the lateral plane parallel to the longitudinal direction 1a and to the vertical direction 1b.

The belt can be connected to the lateral coupling element 6 and to a guide pulley **16** attached directly to the crosswise drive shaft 15a.

To enable the connection or separation of the drive belt 14 to/from the lateral coupling element 6, the releasable connection means 9 comprise a tensioning device **17** consisting of a pulley **17a,** a guide rail **17b** and an elastic tensioning element **17c** for taking up the slack on the connection belt 14, as explained in detail below.

The tensioning device pulley 17a can also be moved manually by overcoming the force of the elastic tensioning element 17c to enable the drive belt 14 to be released and thus enable its connection to or separation from the lateral coupling element 6.

The drive belt 14 is also guided by a return pulley **18,** preferably situated at the same height as the lateral coupling element 6, in a withdrawn position in the longitudinal direction 1 a with respect to the lateral coupling element 6. Said return pulley 18 is substantially also vertically aligned with the guide pulley 16.

The tensioning device pulley 17a is substantially inserted in a virtual diagonal line that joins the lateral coupling element 6 to the guide pulley 16, so as to extend the stretch that the drive belt 14 covers between said elements and thus enable the belt to wind around the guide pulley 16 over an arc of a circumference that is longer than half the total length of said circumference.

The guide rail 17b is thus suitably oriented in a direction substantially perpendicular to the direction of said virtual diagonal line joining the lateral coupling element 6 to the guide pulley 16, while the elastic tensioning element 17c can draw the tensioning device pulley 17a in the longitudinal direction towards the guide pulley 16.

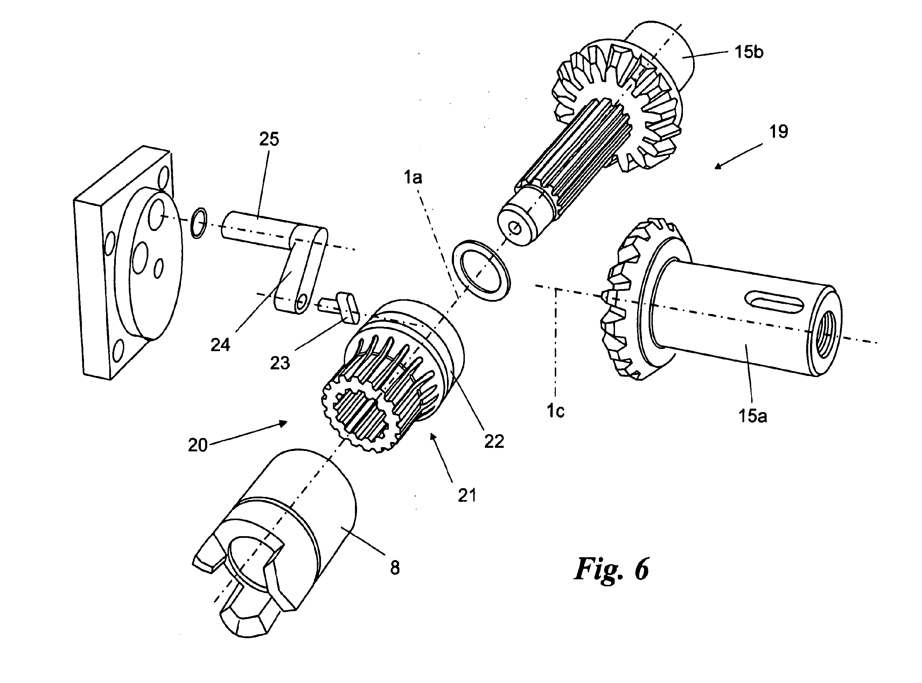

The drive belt 14 can thus turn the crosswise drive shaft 15a around its axis. This shaft is suitably connected to the longitudinal drive shaft 15b by means of a bevel gear connection **19** of the type shown in Fig. 6.

The longitudinal drive shaft 15b is also attached to the front coupling element 8 by means of a movable connection **20.**

More in particular, the movable connection 20 is designed to create or prevent the connection between the releasable connection means 9 and the front coupling element 8.

Said movable connection 20 is illustrated in Fig. 6. It comprises a movable toothed element **21** extending in the longitudinal direction 1a with a freedom of translatory movement in the same direction.

Said movable toothed element 21 is always suitably connected to the longitudinal drive shaft 15b by means of another set of teeth, and it can also be connected to a set of teeth on the inside of the front coupling element 8.

The movable toothed element 21 is thus brought into position to engage with the front coupling element 8, or withdrawn into a position detached from said element, by means of a translatory movement in the longitudinal direction 1 a.

To implement said translatory movement, there is a diametral slot **22** on said element 21 for engaging with a coupling tooth **23** that is movable in the longitudinal direction 1a.

The coupling tooth 23 can be suitably moved in longitudinal direction 1a by means of its connection to an arm **24** capable of rotation around a spindle **25** extending in the crosswise direction 1c.

The spindle 25 is in turn connected to a crank/connecting-rod/crank mechanism **26** that enables its rotation to be linked to the rotation of a manually-operated control lever **27**.

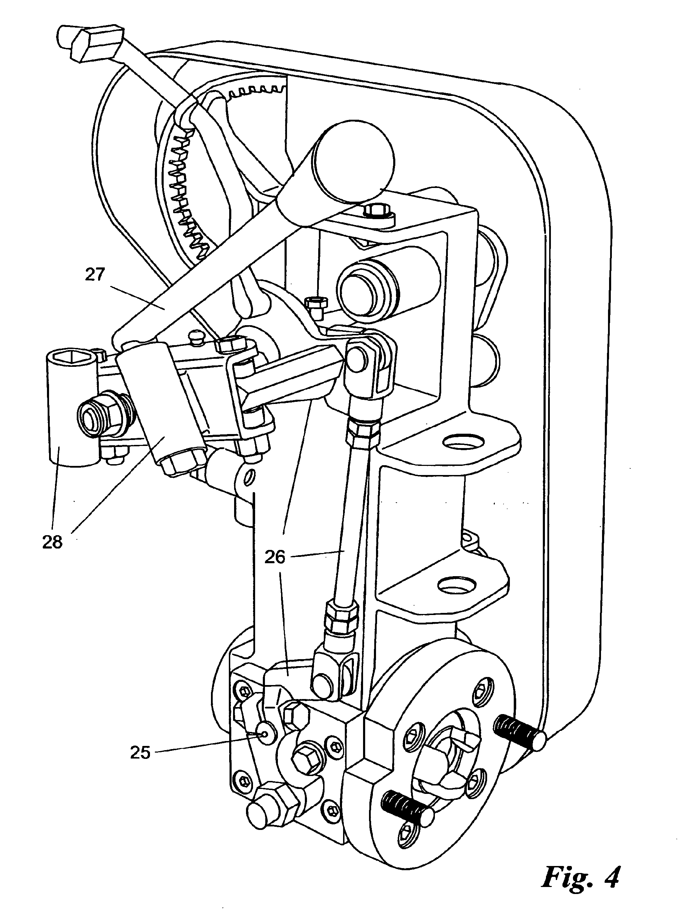

Said crank/connecting-rod/crank system 26 is illustrated in detail in Fig. 4.

The control lever 27 can preferably occupy two positions, coinciding with two seats **28** in which the control lever 27 can engage to enable it to be positioned facing one way or the other, depending on the feed direction of the farming machine 1.

The releasable joining means 11 preferably consist of a suitable pin **29** for inserting in the vertical direction 1b in two through holes forming part of the drive unit 2 and normally suitable for enabling the attachment of specific tools, such as ploughs or the like, to said drive unit 2.

In addition, the releasable joining means 11 preferably comprise two thrust elements **30,** suitably consisting of two screws, to keep the pin 29 turning around its own axis.

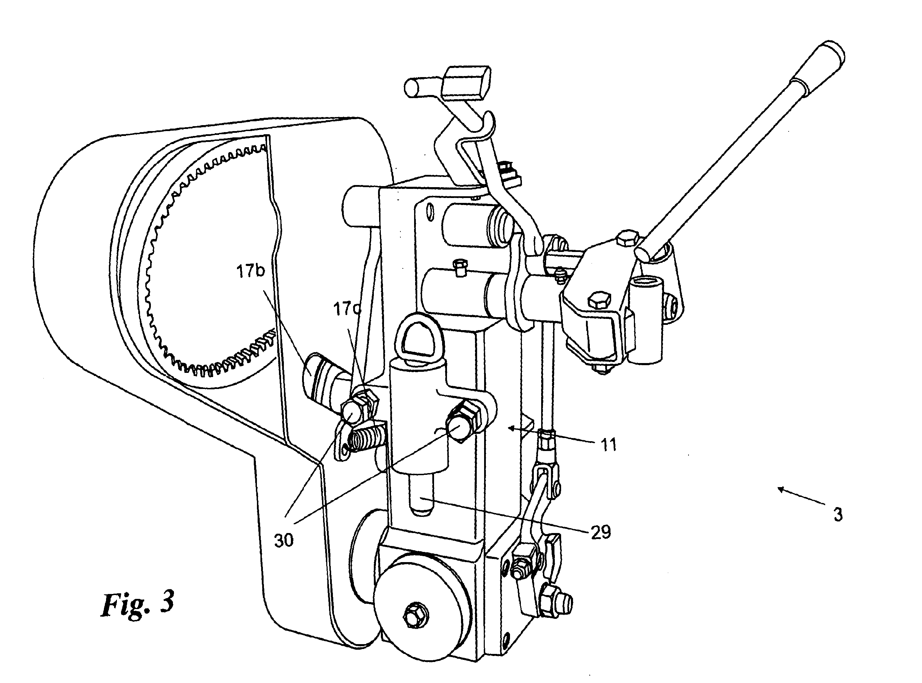

Said releasable joining means 11 are illustrated particularly in Fig. 3.

Finally, the transmission device 3 comprises a safety lever **31,** with a locking element **32** for interfering with the gearing 7 of the drive unit 2, and particularly with the seat for the reverse gear 7d, as shown in Fig. 5.

The safety lever 31 is thus designed to prevent the reverse gear from being engaged because this operation can prove hazardous to the operator when certain tools are being used.

The operation of the farming machine 1 with the above-described structural design is as follows.

The farming machine can be used with or without the transmission device 3. If it is used without the device 3, the farming machine 1 substantially consists of the drive unit 2 and it consequently resembles a tiller.

In this case, the farming machine 1 thus has all of the advantages, in terms of manageability, of a tiller and it can be fitted with all the tools normally used on a tiller.

On the other hand, if the farming machine 1 is used with the transmission device 3, the vast range of tools designed for use on walking tractors can be attached to the machine, which thus offers all the advantages, in terms of versatility, typical of walking tractors.

The person wishing to use the farming machine 1 with the transmission device 3 must first install the transmission device 3 on the drive unit 2.

To do so, the releasable connection means 9 and the releasable joining means 11 must first be connected to the drive unit 2.

In particular, the return pulley 18 has to be manually displaced so as to loosen the drive belt 14 and enable it to be placed around the lateral coupling element 6.

Then the farming machine 1 can be used in the same way as a walking tractor and the tools designed for use with walking tractors can be attached to the machine.

It is consequently necessary to connect said tools to the coupling element 8, to the supporting crown 12, as is generally the case for the known walking tractors.

When the machine 1 is being used, the user can occupy a position behind the tools connected to the device 3, or behind the drive unit 2, depending on the type of tool being used or the type of farming operation to perform.

To change position, the user has to rotate the handlebars 7a through 180°, as is usually the case with walking tractors, and then change the position of the control lever 27 by modifying the seat 28 in which it engages.

When the drive unit 2 is switched on, it transmits the movement through the lateral coupling element 6 to the front coupling element 8.

However, said transmission can only take place if the movable connection 20 connects the movable toothed element 21 to the front coupling element 8.

As explained previously, said connection can be enabled or disabled by means of the manual rotation of the control lever 27.

When the motor 5 is started, the user can thus decide whether or not to enable the tool connected to the device 3.

In some cases, for reasons of safety, the safety lever 31 is used to prevent the reverse gear 7d from being engaged in order to prevent any tools installed from moving towards the user.

The invention offers important advantages.

In fact, the farming machine 1 can be used both as a walking tractor and as a tiller, while retaining the advantages of both types of apparatus.

It is also easily converted from tiller to walking tractor and vice versa, since this simply involves connecting or separating the transmission device 3 to/from the drive unit 2.

Moreover, the transmission device 3 is compatible with the installation and use of tools designed for use with walking tractors.

This advantage is also thanks to the particular design of the device 3, as explained earlier, which enables it to be of limited length in the longitudinal direction 1a, of the order of a few dozen centimetres.

In fact, the limited dimensions of the device 3 enable the drive unit 2 to be operated using its own handling means 7 and the user does not need to move too far away from the drive unit 2 in the longitudinal direction 1a. Moreover, the transmission device 3 is manageable and mechanically very strong, and it needs no particular maintenance.

The transmission device 3 can also be purchased and manufactured separately from the drive unit 2.

A user who already owns a drive unit 2 is consequently not obliged to purchase another one, but can simply purchase the transmission device 3, with a consequent considerable saving in terms of economic outlay, servicing work and space occupied by machinery.

The invention may give rise to variants that shall also form part of the inventive concept described herein.

All the parts may be replaced by equivalent components and may be made of any material, in any shape or size.

## Claims

1. A farming apparatus (3a) for a farming machine comprising: a drive unit (2) including: a revolving lateral coupling element (6) for connecting suitable tools, whose rotational axis is perpendicular to a longitudinal direction (1a) in the horizontal plane, comprising a transmission device (3) comprising a front coupling element (8) capable of rotation substantially in the direction of said longitudinal axis (1a) and designed for connection to a tool, connection means (9) connected to said front coupling element (8) and suitable for linking the rotation of said front coupling element (8) to the rotation of said lateral coupling element (6) of said drive unit (2), wherein said transmission device (3) can be separated from said drive unit (2), since said connection means (9) engage removably with said lateral coupling element (6) and comprise a drive belt (14) suitable for connecting to said lateral coupling element (6), a crosswise drive shaft (15a) connected to said drive belt (14), and a longitudinal drive shaft (15b) for connecting to said front coupling element (8) **characterised in that** said longitudinal drive shaft (15b) is attached to said front coupling element (8) by means of a movable connection (20) for attaching said longitudinal drive shaft (15b) to or separating it from said front coupling element (8).

2. An apparatus according to claim 1, wherein said front coupling element (8) is designed to be connected to a tool designed for use with walking tractors.

3. An apparatus according to one or more of the previous claims comprising releasable joining means (11) for structurally joining said transmission device (3) to said drive unit (2).

4. An apparatus according to one or more of the previous claims, comprising at least one supporting element (12) for structurally attaching a tool to said device (3).

5. An apparatus according to one or more of the previous claims, wherein said transmission device (3) Comprises a control lever (27) and said movable connection (20) can be moved manually by means of said control lever (27).

6. A farming machine (1) defining a longitudinal direction (1a) in the horizontal plane and comprising: a drive unit (2) with a revolving lateral coupling element (6) for connecting suitable tools, **characterised in that** it comprises a farming apparatus (3a) according to one or more of the previous claims.

7. A machine according to claim 6, wherein said drive unit (2) is substantially a tiller.

8. A machine according to claim 6, comprising gearing (7b) that includes a seat for a reverse gear (7d), wherein said transmission device (3) comprises a locking element (32) suitable for interfering with the use of said seat for a reverse gear (7d).

## Patentansprüche

1. Landwirtschaftliche Einrichtung (3a) für landwirtschaftliche Maschine bestehend aus: einer Antriebseinheit (2) umfassend: ein drehbares seitliches Einschubelement (6), das an entsprechende Werkzeuge verbunden werden kann und das in der waagerechten Ebene eine Längsrichtung (1 a) in der waagerechten Ebene bildet, bestehend aus einer Antriebsvorrichtung (3) bestehend aus einem frontalen Einschubelement (8), das im wesentlichen in Richtung der genannten Längsachse (1 a) drehbar ist und an ein Werkzeug verbunden werden kann, Verbindungsmitteln (9), die mit genanntem frontalen Einschubelement (8) verbunden sind und in der Lage sind, die Drehung des genannten frontalen Einschubelements (8) mit der Drehung des genannten seitlichen Einschubelements (6) der genanten Antriebseinheit (2) zu verbinden, wobei genannte Antriebsvorrichtung (3) lösbar von genannter Antriebseinheit (2) vorgesehen ist und genannte Verbindungsmitteln (9) mit genanntem seitlichen Einschubelement (6) lösbar im Eingriff sind und ein Treibriemen (14) vorhanden ist, der an genanntes seitliches Einschubelement (6) angeschlossen werden kann, ferner aus einer an genannten Treibriemen (14) verbundenen quer verlaufenden Antriebswelle (15a) und einer läng verlaufenden Antriebswelle (15b), die an genanntes frontales Einschubelement (8) in Eingriff gebracht werden kann, **dadurch gekennzeichnet, dass** genannte längs verlaufende Antriebswelle (15b) an genanntes frontales Einschubelement (8) durch eine bewegliche Verbindung (20) verbunden ist, die in der Lage ist, genannte längs verlaufende Antriebswelle (15b) an genanntes frontales Einschubelement (8) zu binden oder von diesem zu lösen.

2. Einrichtung nach Anspruch 1, in der genanntes frontales Einschubelement (8) mit einem Werkzeug für Grubber verbunden werden kann.

3. Einrichtung nach einem oder mehreren der vorstehenden Ansprüche, die lösbare Verbindungsmitteln (11) umfasst, welche in der Lage sind, genannte Antriebsvorrichtung (3) mit genannter Antriebseinheit (2) strukturell zu verbinden.

4. Einrichtung nach einem oder mehreren der vorstehenden Ansprüche, die mindestens ein Trägerelement (12) umfasst, das in der Lage ist, ein Werkzeug mit genannter Vorrichtung (3) strukturell zu verbinden.

5. Einrichtung nach einem oder mehreren der vorstehenden Ansprüche, in der genannte Antriebsvorrichtung (3) einen Schalthebel (27) umfasst und in der genannte bewegliche Verbindung (20) über genannten Schalthebel (27) manuell bewegbar ist.

6. Landwirtschaftliche Maschine (1), die in der waagerechten Ebene eine Längsrichtung (1 a) bildet und aus einer Antriebseinheit (2) besteht, welche ein drehbares und zum Verbinden an entsprechende Werkzeuge geeignetes seitliches Einschubelement (6) umfasst, **dadurch gekennzeichnet, dass** sie eine landwirtschaftliche Einrichtung (3a) nach einem oder mehreren der vorstehenden Ansprüche umfasst.

7. Maschine nach Anspruch 6, in der genannte Antriebseinheit (2) im wesentlichen eine Motorhacke ist.

8. Maschine nach Anspruch 8, die ein Getriebe (7b) umfasst, das aus einem Sitz eines Rückwärtsgangs (7d) besteht und in der genannte Antriebsvorrichtung (3) ein Blockierungselement (32) umfasst, das in der Lage ist, auf genannten Sitz des Rückwärtsgangs (7d) einzuwirken.

## Revendications

1. Équipement agricole (3a) pour machine agricole comprenant : une unité motrice (2) incluant : un élément de raccord latéral (6) pivotant pouvant être relié à des outils appropriés et définissant sur le plan horizontal une direction longitudinale (1a), comprenant un dispositif de transmission (3) composé d'un élément de raccord frontal (8) pivotant substantiellement en direction dudit axe longitudinal (1a) et pouvant être relié à un outil, de moyens de connexion (9) reliés audit élément de raccord frontal (8) et pouvant relier la rotation dudit élément de raccord frontal (8) à la rotation dudit élément de raccord latéral (6) de ladite unité motrice (2), dans lequel ledit dispositif de transmission (3) est prévu pour être séparable de ladite unité motrice (2), lesdits moyens de connexion (9) étant engagés de manière amovible avec ledit élément de raccord latéral (6) et comprenant une courroie de transmission (14), pouvant être relié audit élément de raccord latéral (6), un arbre de transmission transversale (15a), relié à ladite courroie de transmission (14), et un arbre de transmission longitudinale (15b) pouvant être relié audit élément de raccord frontal (8), **caractérisé par le fait que** ledit arbre de transmission longitudinale (15b) est relié audit élément de raccord frontal (8) par une liaison mobile (20) prévue pour relier ou séparer ledit arbre de transmission longitudinale (15b) avec ledit élément de raccord frontal (8).

2. Équipement selon la revendication 1, où ledit élément de raccord frontal (8) est prévu pour être relié à un outil destiné aux motoculteurs.

3. Équipement selon une ou plusieurs des revendications précédentes, comprenant des moyens de jonction pouvant être relâchés (11), prévus pour accoupler structurellement ledit dispositif de transmission (3) à ladite unité motrice (2).

4. Équipement selon une ou plusieurs des revendications précédentes, comprenant au moins un élément de soutien (12) prévu pour relier structurellement un outil audit dispositif (3).

5. Équipement selon une ou plusieurs des revendications précédentes, où ledit dispositif de transmission (3) comprend un levier de commande (27) et où ladite liaison mobile (20) peut être déplacée manuellement grâce au levier de commande (27).

6. Machine agricole (1) définissant sur le plan horizontal une direction longitudinale (1a) et comprenant : une unité motrice (2) incluant: un élément de raccord latéral (6) pivotant et prévu pour être relié à des outils appropriés, **caractérisée par le fait qu'**elle comprend un équipement agricole (3a) selon un ou plusieurs des revendications précédentes.

7. Machine selon la revendication 6, où ladite unité motrice (2) est substantiellement une houe à moteur.

8. Machine selon la revendication 8, comprenant une boîte de vitesses (7b) incluant un emplacement de marche arrière (7d) et où ledit dispositif de transmission (3) comprend un élément de blocage (32) prévu pour interférer avec ledit emplacement de marche arrière (7d).
